Europäisches Patentamt

European Patent Office

Office européen des brevets

(11) Publication number: **0 215 741**
**A2**

(12) # EUROPEAN PATENT APPLICATION

(21) Application number: **86830143.3**

(22) Date of filing: **28.05.86**

(51) Int. Cl.⁴: **B 65 D 85/78**
**B 65 D 25/38**

(30) Priority: **20.09.85 IT 2900885**

(43) Date of publication of application:
**25.03.87 Bulletin 87/13**

(84) Designated Contracting States:
**AT BE CH DE FR GB LI LU NL SE**

(71) Applicant: **ITALGEL S.P.A.**
**Viale Mentana, 43**
**I-43100 Parma (IT)**

(72) Inventor: **Ambrogi, Mario**
**Via Mattei, 10**
**Parma (IT)**

(74) Representative: **Lanzoni, Luciano**
**c/o BUGNION S.p.A. Viale Trento Trieste, 25**
**I-41100 Modena (IT)**

(54) **Ice cream cornet with a plastic outer carton.**

(57) The invention relates to an ice cream cornet packaged in a plastic carton. The cornet (2) is of shape such as to permit its being accommodated within the carton (1), occupying the top part and leaving the bottom part empty. Squeezing the sides of the carton together with the fingers, the plastic folds easily, and the cornet (2) is pushed out of the carton.

## Fig.1

EP 0 215 741 A2

Bundesdruckerei Berlin

# Description

## Ice cream cornet with a plastic outer carton

The invention described herein relates to an ice cream cornet with a plastic outer carton.

The prior art embraces packaged ice cream cornets the wafer cornet of which is surrounded by a wrapping, in most instances a plastic carton. Particular difficulty is encountered when separating the cornet from the outer wrapping, which in such packaged ice creams involves removing the edible cornet from the plastic carton, an operation which becomes increasingly difficult as the wafer becomes progressively more moist; in effect the cornet gradually loses its mechanical strength and tends to cling more and more to the walls of the carton.

The object of the invention described herein is to make removal of a pre-packaged ice cream cornet from its outer wrapping, generally a plastic carton, considerably more easy than hitherto permitted by prior art methods.

To this end, a wafer cornet according to the invention is embodied such that it may be accommodated in a relative plastic carton, occupying the uppermost part such that an empty space is left between the inner side and bottom surfaces of the bottom part of the carton and the outer surface of the bottom of the cornet. The sides of the bottom part of such a carton are embodied in such a way as to deform easily when pressed inward by the consumer's fingers.

A preferred embodiment of the invention will now be described, by way of example, with the aid of the accompanying drawings, in which:

fig 1 is a schematic representation showing a vertical section through the centre of the cornet;

fig 2 shows the same section as in fig 1, in which cornet and carton are seen in different positions assumed on consumption of the ice cream.

With reference to the drawings, 1 denotes a plastic carton accommodating a wafer cornet 2 to be filled with ice cream.

In the embodiment illustrated, the carton 1 exhibits a top section 3 of cone frustum shape tapering down toward and joining with a bottom section 5, likewise of cone frustum shape, which is of smaller diameter than the top section and enclosed at bottom by a base 7. The top of the carton 1 is provided with a rim 9 serving to stiffen the structure. The wafer cornet 2 is shaped such as to permit accommodation by the carton 1, occupying the uppermost part such that an empty space separates it from the inner surfaces of the sides of the bottom section 5 and the base 7. Accordingly, the cornet 2 is of cone frustum shape overall, and embodied such that the outer surface of its base 4 is contoured gently round to join with the outer surfaces of the tapering sides. The topmost extremity of the cornet 2 exhibits a projecting lip by way of which the cornet itself may sit on the stiffening rim 9 offered by and establishing the topmost extremity of the carton 1.

In the embodiment shown, the overall cone frustum shape of the cornet is in effect produced by joining together of a slightly tapered top section 8 and a slightly tapered bottom section 10, the bottom section being of smaller diameter than the top section. The cornet is fashioned from a substance possessing resistance to moisture, and is therefore capable of retaining considerable strength. In practical terms, the cornet 2 rests on the carton 1 by way of its top section, since the base 4 makes no contact with the base 7 of the carton, but is positioned at a certain distance therefrom.

The empty space left between the base 4 of the cornet and the base 7 of the carton is the feature which enables easy removal of the cornet from its carton, an operation accomplished simply by exploiting the deformability of the lower part of the carton 1, and squeezing the bottom section 5 as indicated by the arrows 11; the requisite pressure will be produced easily enough by the fingers of the hand in which the carton is held.

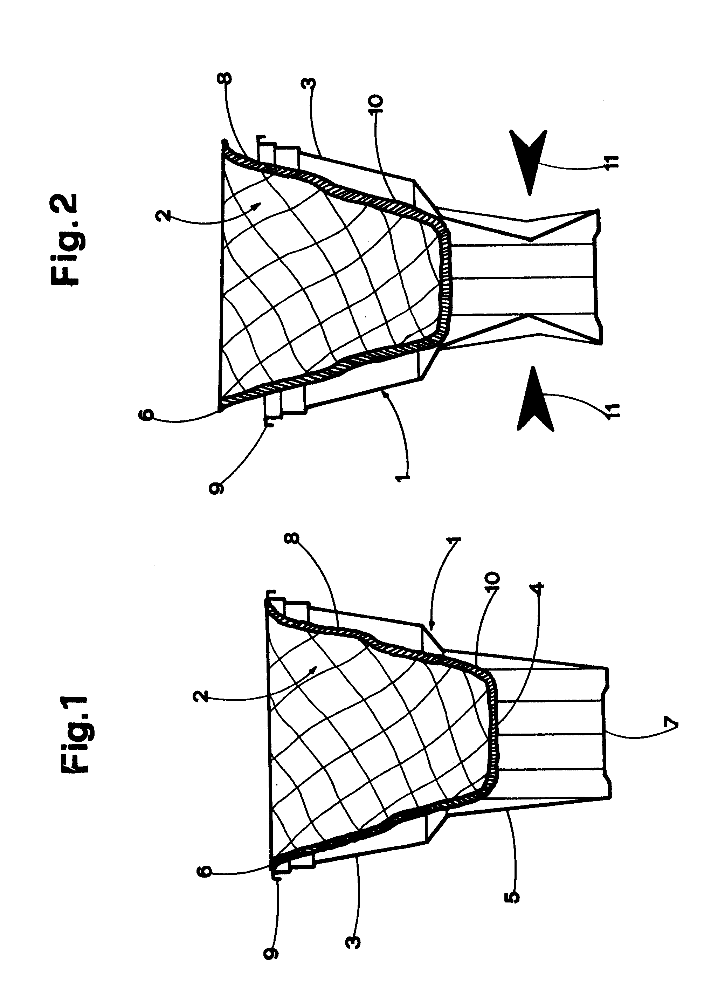

Following compression and deformation of the bottom section 5, the sides of the lower part of the carton will urge against the bottom of the cornet 2, pushing the cornet as a whole up into the position shown in fig 2; the cornet can thus be removed from the carton with the minimum of effort.

It will be clear enough that the self-same advantage -i.e. easy removal of the cornet, can be gained even with a cornet of shape slightly different to that illustrated; moreover, outer wrappings of the type in question are never in direct contact with the ice cream, and could therefore be embodied in a readily available material other than plastic (paper, cardboard etc.). Similarly, the shape of the carton itself could be other than that illustrated, say, a cone or pyramid, provided that space is left between cornet and carton such as will enable the movement described above.

## Claims

1) An ice cream cornet with a plastic outer carton, characterized
-in that the cornet (2) is of shape such as to enable its accommodation within a plastic carton (1), occupying the uppermost part thereof in such a way that an empty space is left between the inner surfaces of the carton and the outer surface of of the cornet;
and in that the sides of the carton deform easily when pressed inwardly by the fingers of one hand.

2) Ice cream cornet as in claim 1, wherein the cornet (2) is of cone frustum shape overall, and comprises a bottom section exhibiting a base (4) the outer surface of which is contoured gently around to join with the outer surface of its tapering sides; and wherein the cornet (2) is proportioned such as to rest on the carton by way of its top section.

3) Ice cream cornet as claim 2, wherein the cornet is embodied in a substance possessing resistance to moisture.

# Fig.1

# Fig.2

86830143 3